**Europäisches Patentamt**

**European Patent Office**

**Office européen des brevets**

(19)

(11) Veröffentlichungsnummer : **0 305 711 B1**

(12)

# EUROPÄISCHE PATENTSCHRIFT

(45) Veröffentlichungstag der Patentschrift :
08.05.91 Patentblatt 91/19

(51) Int. Cl.⁵ : **B61D 45/00,** B61D 3/16,
B60P 7/12

(21) Anmeldenummer : **88111461.5**

(22) Anmeldetag : **16.07.88**

(54) **Festlegeeinrichtung für Blechrollen in Fahrzeugen, insbesondere in Eisenbahngüterwagen.**

(30) Priorität : 29.08.87 DE 3728879

(43) Veröffentlichungstag der Anmeldung :
08.03.89 Patentblatt 89/10

(45) Bekanntmachung des Hinweises auf die
Patenterteilung :
08.05.91 Patentblatt 91/19

(84) Benannte Vertragsstaaten :
AT BE DE FR GB NL SE

(56) Entgegenhaltungen :
AT-B- 382 830
DE-A- 1 605 031
DE-A- 2 159 118
DE-A- 2 429 715
DE-C- 440 915

(72) Erfinder : Kuppe, Gerhard
Hauptstrasse 31
W-3321 Lesse (DE)
Erfinder : Schmidt, Walter
Renvad 4
W-3320 Salzgitter 1 (DE)
Erfinder : Uhlich, Klaus
Cyriaksring 31
W-3300 Braunschweig (DE)
Erfinder : Galle, Manfred, Dipl.-Ing.
Handwerkerstrasse 7
W-4986 Rödinghausen (DE)
Erfinder : Reemtsema, Klaus-Dietrich,
Dipl.-Ing.
Blumenstrasse 7
W-4950 Minden (DE)
Erfinder : Hecker, Heribert, Dipl.-Ing.
Hermann-Obeth-Weg 5
W-4950 Minden (DE)

(73) Patentinhaber : Linke-Hofmann-Busch
Waggon-Fahrzeug- Maschinen GmbH
Postfach 41 11 60 Gottfried-Linke-Strasse
W-3320 Salzgitter 41 (DE)

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Festlegeeinrichtung für Blechrollen nach dem Oberbegriff des Anspruchs 1.

Aus der DE-A- 29 26 299 ist eine Festlegeeinrichtung für schwere Blechrollen in Eisenbahngüterwagen bekannt, bei der jeder Muldenwand der Lademulden zwei die seitliche Bewegung der Blechrollen begrenzende Arme als Abstützung zugeordnet sind, die um eine zu den Mulden parallel angeordnete Achsen nach oben schwenkbar und auf der Achse der Seite nach verschieb- und in Rastschienen festlegbar sind.

Es hat sich gezeigt, daß diese Festlegeeinrichtung zum sicheren Festlegen von schmalen Blechrollen, sogenannte Schmalbandcoils, nicht ausreicht und derartige Blechrollen unter oder über den Arm der Abstützung rutschen können. Bei offenen Eisenbahngüterwagen stellt dies eine große Gefährdung des Ladepersonals und aller Verkehrsteilnehmer dar ; bei geschlossenen Eisenbahngüterwagen, insbesondere bei den Haubenwagen, können die Blechrollen in derartige Schräglagen geraten, daß sie sich an die Innenseiten der verschiebbaren Wandteile anlegen und ein Öffnen der Seitenwände bzw. Hauben durch Verschieben blockiert ist. Weiterhin ist ein seitliches Verschieben der Abstützung nur unter erheblichem Kraftaufwand unter Anhebung der ganzen Abstützung möglich.

Der Erfindung liegt daher die Aufgabe zugrunde, eine gattungsgemäße Festlegeeinrichtung für Blechrollen zu verbessern, so daß auch schmale Blechrollen sicher festzulegen sind und ein seitliches Verschieben und Festlegen der die Blechrollen festlegenden seitlichen Abstützungen bei geringem Kraftaufwand ermöglicht.

Die Aufgabe wird durch die im Anspruch 1 gekennzeichnete Festlegeeinrichtung gelöst.

Zweckmäßige Ausgestaltungen und Weiterbildungen des Erfindungsgegenstandes sind in den Unteransprüchen angegeben.

Die Erfindung ist anhand eines in der Zeichnung dargestellten Ausführungsbeispieles näher erläutert.

Es zeigt

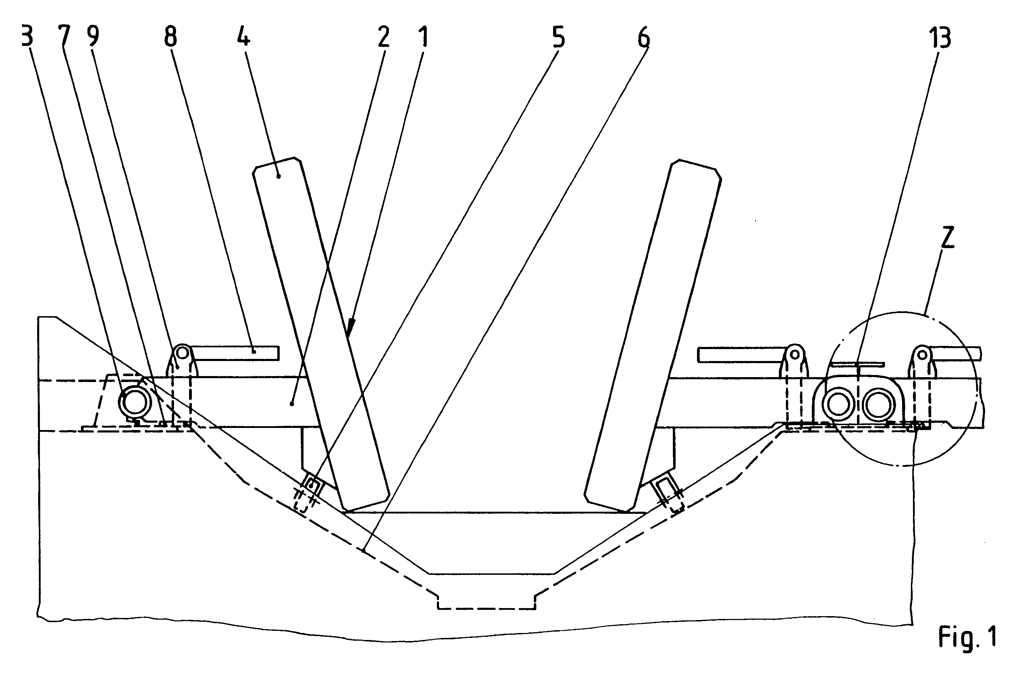

Fig. 1 eine Seitenansicht einer Festlegeeinrichtung,

Fig. 2 eine Draufsicht der Festlegeeinrichtung,

Fig. 3 die Einzelheit Z der fig. 1.

Die Festlegeeinrichtung für Blechrollen in Fahrzeugen mit mindestens einer auf der Ladefläche in Fahrzeugquerrichtung angeordneten Mulde weist zwei die seitliche Bewegung der Blechrollen begrenzende Abstützungen 1 auf. Jeder Mulde ist dabei mindestens eine Festlegeeinrichtung zugeordnet. Im Regelfall sind zwei Festlegeeinrichtungen je Mulde vorgesehen. Die Abstützung 1 weist einen Haltearm 2 auf, der auf einer am Rand der Mulde bzw. zwischen jeweils zwei Mulden und zu den Mulden parallel ausgerichteten Achse 3 der Seite nach verschiebbar gelagert ist. Der Haltearm 2 ist annähernd parallel zum Untergestell ausgerichtet und trägt an seinem zur Mulde weisenden freien Ende einen Stützarm 4, der den Haltearm 2 nach oben und unten hammerartig überragt. Der Stützarm 4 ist gemeinsam mit dem Haltearm 2 parallel zur Stirnseite der Mulde angeordnet. Der Stützarm 4 ist innerhalb dieser senkrechten Ebene vertikal oder in einem Winkel zur Vertikalen ausgerichtet, insbesondere im Winkel von ca. 15° in Richtung auf die Achse 3.

Die Abstützung 1 trägt am zur Mulde weisenden Abschnitt eine Rolleinheit 5, die sich an der Muldenwand 6 abstützt und ein rollenunterstütztes, leichtgängiges Verschieben der Abstützung 1 in ihrer Verschiebeebene d. h., in Fahrzeugquerrichtung zuläßt. Zwischen der Muldenwand 6 und der zugeordneten Achse 3 ist zu dieser parallel eine fahrzeugfeste Rastschiene 7 angeordnet. Am Haltearm 2 ist im Bereich der Rastschiene 7 eine über einen Betätigungshebel 8 beaufschlagbare und mit der Rastschiene 7 in Eingriff bringbare Sperre 9 angeordnet.

Die Sperre 9 ist als kurzer Hebelarm eines an der Abstützung 1 gelagerten Winkelhebels ausgebildet, deren langer und schwererer Hebelarm als Betätigungshebel 8 ausgebildet ist. Die Rastschiene 7 ist dabei kammartig ausgebildet. Der Winkelhebel weist durch die Ausbildung eine bevorzugte Endlage, die Sperrlage, auf, die sich nach der Entriegelung der Sperre 9 über den Betätigungshebel 8 und nach dem seitlichen Verschieben der Abstützung 1 selbsttätig einstellen kann. Das ordnungsgemäße Verriegeln der Sperre 9 ist durch die Stellung des Betätigungshebels 8 optisch erkennbar.

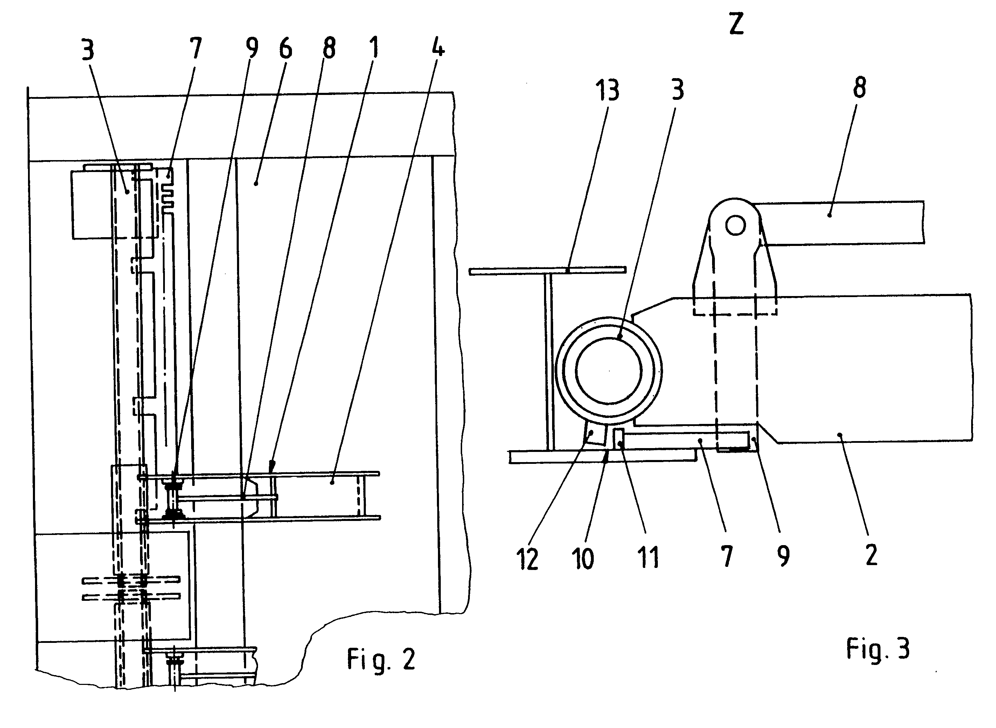

Die begrenzte Verschwenkbarkeit der Abstützung 1 kann durch eine Schwenksperre 10 gemäß Fig. 3 auf dem gesamten Verschiebeweg der Abstützung 1 oder bereichsweise gesperrt werden. Es erweist sich als zweckmäßig, wenn die Schwenksperre 10 in der seitlichen Endlage der Abstützung 1 entriegelt oder entriegelbar ist.

Die Schwenksperre 10 weist in der bevorzugten Bauweise eine wagenfeste zur Achse 3 parallele Anschlagschiene 11 auf, die bereichsweise oder auf ganzer Erstreckung der Achse 3 hinter einen an der Abstützung 1 angeordneten Nocken 12 greift.

Ein Verschwenken der Abstützung 1 nach oben aus dem Bereich des Durchmessers der Blechrolle ist notwendig, wenn ein senkrechtes Anheben der Blechrolle über den höchsten Punkt der Abstützung 1 wegen zu geringer aufzubringenden Hubhöhe nicht möglich ist und nur ein seitliches Verschwenken oder Herausheben möglich ist.

Die Achse 3 ist nach oben durch eine belastbare, begehbare Abdeckung 13 abgedeckt.

## Ansprüche

1. Festleggeinrichtung für Blechrollen in Fahrzeugen, insbesondere in Eisenbahngüterwagen, mit Ladeflächen zum Transport von Blechrollen mit mindestens einer quer zur Fahrtrichtung angeordneten Mulde, die je zwei in entgegengesetzer Richtung schrägstehende Muldenwände (6) aufweist und jeder Mulde mindestens eine Festlegeeinrichtung mit zwei die seitliche Bewegung der Last begrenzenden Abstützungen (1) zugeordnet sind, die jeweils einen Haltearm (2) aufweisen, der auf einer am Rand der Mulde bzw. zwischen jeweils zwei Mulden und zu diesen parallel angeordneten Achse (3) der Seite nach verschieb- und in Rastschienen festlegbar ist, dadurch gekennzeichnet, daß an jedem Haltearm (2) der Abstützung (1) ein Stützarm (4) starr befestigt ist, der parallel zur Stirnseite der Mulde den Haltearm (2) nach oben und unten überragt, daß am zur Muldenwand (6) weisenden Teil der Abstützung (1) eine Rolleinheit (5) angeordnet ist, die sich an der Muldenwand (6) abstützt, daß sich die Achse (3) und die Rastschiene (7) für die Abstützung (1) von einer Stirnseite der Mulde mindestens bis in den Bereich der Fahrzeuglängsmitte erstrecken und daß eine über einen Betätigungshebel (8) betätigbare und mit der Rastschiene (7) in Eingriff bringbare Sperre (9) die Abstützung (1) gegen Querverschiebung sichert oder entriegelt.

2. Festlegeeinrichtung für Blechrollen nach Anspruch 1, dadurch gekennzeichnet, daß eine Schwenksperre (10) ein Verschwenken der Abstützung (1) um die Achse (3) sperrt.

3. Festlegeeinrichtung für Blechrollen nach Anspruch 2, dadurch gekennzeichnet, daß in der seitlichen Endlage der Abstützung (1) die Schwenksperre (10) entriegelt oder entriegelbar ist.

4. Festlegeeinrichtung für Blechrollen nach Anspruch 2 oder 3, dadurch gekennzeichnet, daß die Schwenksperre (10) eine wagenfeste zur Achse (3) parallele Anschlagschiene (11) aufweist, hinter die ein an der Abstützung (1) angeordneter Nocken (12) greift.

5. Festlegeeinrichtung für Blechrollen nach mindestens einem der Ansprüche 1-4, dadurch gekennzeichnet, daß die Achse (3) nach oben durch eine belastbare Abdeckung (13) abedeckt ist.

6. Festlegeeinrichtung für Blechrollen nach mindestens einem der Ansprüche 1-5, dadurch gekennzeichnet, daß der Stützarm (4) im Winkel zur Vertikalen ausgerichtet ist.

7. Festlegeeinrichtung für Blechrollen nach Anspruch 6, dadurch gekennzeichnet, daß der Winkel zur Vertikalen ca. 15° in Richtung auf die Achse (3) beträgt.

## Claims

1. A securing device for sheet metal rolls in vehicles, in particular railway goods wagons, with loading surfaces for the transportation of sheet metal rolls comprising at least one trough which extends transversely to the direction of travel and which comprises two respective trough walls (6) extending obliquely in different directions and where each trough is assigned at least one securing device with two supports (1) which delimit the lateral movement of the load and which each comprise a retaining arm which can be displaced laterally on an axle (3) which extends at the edge of the trough or between two respective troughs and in parallel thereto and secured in locking rails, characterised in that a support arm (4) is rigidly attached to each retaining arm (2) of the support (1), which support arm (4) projects upwardly and downwardly beyond the retaining arm (2) in parallel to the end side of the trough, that a roller unit (5) which abuts against the trough wall (6) is arranged on that part of the support (1) facing towards the trough wall (6), that the axle (3) and the locking rail (7) for the support (1) extend from one end side of the trough at least into the region of the vehicle longitudinal central plane, and that a lock (9), which can be actuated via an actuating lever (8) and brought into engagement with the locking rail (7) secures the support (1) against transverse displacement or unlocks the support (1).

2. A securing device for sheet metal rolls as claimed in Claim 1, characterised in that a pivot lock (10) prevents the support (1) from pivoting about the axle (3).

3. A securing device for sheet metal rolls as claimed in Claim 2, characterised in that in the lateral end position of the support (1) the pivot lock (10) is unlocked or can be unlocked.

4. A securing device for sheet metal rolls as claimed in Claim 2 or Claim 3, characterised in that the pivot lock (10) comprises a stop rail (11) which is fixed to the wagon, extends in parallel to the axle (3) and behind which engages a lug (12) arranged on the support (1).

5. A securing device for sheet metal rolls as claimed in at least one of Claims 1 to 4, characterised in that the axle (3) is covered at the top by a cover (13) capable of bearing loads.

6. A securing device for sheet metal rolls as claimed in at least one of Claims 1 to 5, characterised in that the support arm (4) is aligned at an angle to the vertical plane.

7. A securing device for sheet metal rolls as claimed in Claim 6, characterised in that the angle to the vertical plane amounts to approximately 15° in the direction of the axle (3).

## Revendications

1. Dispositif d'immobilisation pour bobines de tôle dans des véhicules, notamment des wagons de marchandises, pourvus de surfaces de chargement destinées au transport de bobines de tôle et comportant au moins un berceau disposé transversalement au sens de déplacement, ledit berceau présentant deux parois de berceau (6) placées en biais dans des directions opposées, à chaque berceau étant affecté au moins un dispositif d'immobilisation pourvu de deux supports (1) limitant le déplacement latéral de la charge et présentant chacun un bras d'appui (2) apte à être déplacé latéralement sur un axe (3) disposé au bord du berceau, respectivement entre deux berceaux, parallèlement à ceux-ci, et à être immobilisé dans des rails crantés, caractérisé en ce qu'un bras de support (4) est fixé de façon rigide au niveau de chaque bras d'appui (2) du support (1), lequel bras de support (4) dépasse, vers le haut et vers le bas, du bras d'appui (2), parallèlement à la face avant du berceau, en ce qu'il est prévu, au ni veau de la partie de support (1) dirigée vers la paroi de berceau (6), une unité formant roulette (5) en appui au niveau de la paroi de berceau (6), en ce que l'axe (3) et le rail cranté (7) prévus pour le support (1) s'étendent à partir d'une face avant du berceau, au moins jusque dans la zone médiane longitudinale du véhicule, et en ce qu'un organe d'arrêt (9) apte à être actionné par l'intermédiaire d'un levier d'actionnement (8) et à être accouplé avec le rail cranté (7) protège le support (1) à l'encontre d'un déplacement transversal ou le débloque.

2. Dispositif d'immobilisation pour bobines de tôle selon la revendication 1, caractérisé en ce qu'un organe de blocage de pivotement (10) empêche un pivotement du support (1) autour de l'axe (3).

3. Dispositif d'immobilisation pour bobines de tôle selon la revendication 2, caractérisé en ce que l'organe de blocage de pivotant (10) est débloqué ou apte à être débloqué en position extrême latérale du support (1).

4. Dispositif d'immobilisation pour bobines de tôle selon la revendication 2 ou 3, caractérisé en ce que l'organe de blocage de pivotement (10) possède un rail de butée (11) solidaire du wagon et parallèle à l'axe (3), derrière lequel vient en prise une came (12) disposée au niveau du support (1).

5. Dispositif d'immobilisation pour bobines de tôle selon l'une au moins des revendications 1 à 4, caractérisé en ce que l'axe (3) est couvert, vers le haut, d'une couverture (13) apte à être sollicitée.

6. Dispositif d'immobilisation pour bobines de tôle selon l'une au moins des revendications 1 à 5, caractérisé en ce que le bras de support (4) est orienté suivant un certain angle par rapport à la verticale.

7. Dispositif d'immobilisation pour bobines de tôle selon la revendication 6, caractérisé en ce que l'angle par rapport à la verticale est d'environ 15° direction de l'axe (3).

Fig. 1

3 7 9 8 4 2 1 5 6 13

Z

EP 0 305 711 B1

Fig. 2

Fig. 3

Z

EP 0 305 711 B1